# FASCICULE DE BREVET EUROPEEN

(11) **EP 2 483 062 B1**
(45) Date de publication et mention de la délivrance du brevet: **15.04.2015**
(21) Numéro de dépôt: 10777050.5
(22) Date de dépôt: 30.09.2010
(51) Int. Cl.: B29B 11/16, B29C 70/38, B29C 70/22

(54) **PROCÉDÉ ET DISPOSITIF POUR LA FABRICATION AUTOMATISÉE DE PRÉFORMES FIBREUSES SÈCHES**
VERFAHREN UND VORRICHTUNG ZUR AUTOMATISIERTEN HERSTELLUNG VON TROCKENFASERVORFORMEN
METHOD AND DEVICE FOR THE AUTOMATED PRODUCTION OF DRY FIBROUS PREFORMS

(30) Priorité: 01.10.2009 FR 0956871
(43) Date de publication de la demande: 08.08.2012
(73) Titulaire: Airbus Operations (S.A.S.), 31060 Toulouse (FR)
(72) Inventeur: BLOT, Philippe, F-44000 Nantes (FR); MARCHAND, Christophe, F-44400 Rezé (FR); LE BAIL, Claude, F-44220 Coueron (FR); DESEUR, Simon, F-69004 Lyon (FR); SOTO, Jérôme, F-44000 Nantes (FR)
(74) Mandataire: Gicquel, Olivier Yves Gérard
(86) Numéro de dépôt international: PCT/FR2010/052067
(87) Numéro de publication internationale: WO 2011/039484

(56) Documents cités:
- WO-A1-99/15323
- WO-A1-2009/097514
- FR-A1- 2 920 743
- Gay, Daniel: "Matériaux composites", 1997, HERMES, Paris, XP002617552, ISBN: 2-86601-586-X page 56 - page 59

## Description

L'invention concerne un dispositif et un procédé pour la réalisation de préformes textiles allongées, destinées à la fabrication de pièces composites structurales par un procédé faisant appel à l'infusion de résine.

De telles préformes sont dites sèches et ne comprennent qu'une petite proportion de liant, généralement inférieure à 5 %, nécessaire pour maintenir la cohésion de ladite préforme, laquelle doit rester cependant suffisamment poreuse pour permettre à la résine de l'imprégner totalement lors de l'opération d'infusion.

Plus particulièrement le dispositif et le procédé objets de l'invention sont adaptés à la fabrication de préformes sensiblement circulaires destinées par exemple à la réalisation de cadres ou de secteurs de cadres de fuselage d'aéronef.

Une telle pièce structurale se présente sous la forme d'un profilé dont la section sensiblement constante peut prendre la forme générale d'un L, d'un U, d'un Z, ou des formes plus complexes, ladite section s'étendant selon un axe longitudinal décrivant une courbe plane quelconque, sur une longueur supérieure à 10 fois la largeur de la section.

La section d'un tel profilé comprend au moins deux ailes non coplanaires. Dans le cas d'une pièce sensiblement circulaire telle qu'un cadre de fuselage, au moins l'une des deux ailes présente une variation de rayon de courbure selon sa largeur. Typiquement le rayon de courbure moyen est supérieur à 20 fois la largeur. La section de la pièce peut être localement élargie plus particulièrement dans le sens radial afin de réaliser des éclissages.

De telles pièces structurales sont obtenues à partir de fibres empilées selon des orientations et une séquence d'empilement définies. Un exemple d'un tel profilé est décrit dans la demande de brevet française FR2920743 au nom de la demanderesse.

Selon un exemple de réalisation, un tel profilé est obtenu en plaçant une préforme consistant en une pluralité de couches de fibres sèches d'orientation définie, ou plis, reproduisant sensiblement la forme de la pièce finale dans l'empreinte d'un moule étanche. Puis, les fibres sont noyées dans la résine par transfert ou par infusion de résine dans la préforme et finalement la préforme est cuite afin de polymériser ladite résine.

Selon l'art antérieur l'obtention de la préforme fait appel à des opérations manuelles consistant à déposer les différents plis sur un outillage gabarit, poinçon ou matrice, reproduisant sensiblement la forme de la pièce. Les fibres sont déposées en bandes sous forme de nappes non tissées, de tissus ou d'empilements multi-axiaux. L'opérateur contraint lesdites bandes à épouser la forme de l'outillage tant en section qu'en profil longitudinal sans y induire de froissement ou d'ondulation des fibres sous peine de faire chuter les caractéristiques mécaniques de la pièce finale. Cependant, les fibres telles que les fibres de carbone ou de verre ne présentent aucune capacité de déformation plastique. Lors de la dépose, l'opérateur doit veiller à maintenir une tension sensiblement constante et uniforme dans les différentes couches déposées, de sorte à leur faire épouser la forme de l'outillage par la variation contrôlée de la distance et du glissement entre fibres sans froissement.

Cette opération, consistant à presser et à tendre de manière contrôlée une préforme fibreuse constituée de fibres continues sur un outillage est désignée classiquement sous le terme « d'épanouissement ».

Le maintien de la cohésion de la préforme est réalisé en activant thermiquement la faible quantité de liant contenue dans les bandes déposées en chauffant localement celles-ci. Cet échauffement a pour effet de fluidifier ladite faible quantité de liant qui imprègne les fibres en contact. Cette fluidification s'accompagne généralement d'un foisonnement du liant qui augmente de volume, ce foisonnement est maintenu par une pression. La polymérisation au moins partielle du liant fixe les couches entre elles et à l'outillage. En règle générale lors d'opérations de drapage manuel, l'opérateur se contente de souder localement les plis entre eux par points ou selon des lignes. Puis, tous les X plis déposés (en général 4 ou 5) la préforme est compactée à chaud par un dispositif de type sac à vide.

Cette opération manuelle nécessite une certaine dextérité de la part de l'opérateur, implique des temps de manipulation important et des moyens spécifiques pour installer les dispositifs de compactage et conduit par conséquent à des coûts de production élevés. Ce procédé d'obtention reste donc limité à la fabrication de pièces en petite série.

On connaît de l'art antérieur des procédés de drapage automatisés ou partiellement automatisés pour la réalisation de préformes allongées. Ceux-ci sont principalement adaptés à la réalisation de préformes à partir de bandes pré-imprégnées de résine thermodurcissable à l'état crue. De telles bandes sont pégueuses et se maintiennent facilement sous forme d'un empilement compact sur l'outillage sans le besoin d'un cycle de pression-température de compactage particulier.

Le document WO 2009/097514 divulgue un procédé pour la dépose continue sur la longueur d'une forme allongée d'une bande fibreuse dont la section comprend au moins deux ailes non coplanaires caractérisé en ce qu'il comprend des étapes consistant à séquentiellement et dans cette ordre :
a) Chauffer un tronçon de la bande
b) Plaquer ledit tronçon sur l'une des faces de la préforme
c) Préformer à chaud le tronçon à la section de la préforme
d) Maroufler à chaud le tronçon sur les faces de la préforme

Le brevet EP0436415 décrit un dispositif pour le formage de préformes allongées circulaires essentiellement à partir de bandes pré-imprégnées, celles-ci étant épanouies sur un outillage par l'action progressive d'une vessie. Le dispositif décrit dans ce brevet est difficilement adaptable à des pièces de grande dimension telles que des cadres de fuselage d'avions gros porteurs.

Par ailleurs, ce dispositif ne permet pas de maintenir en forme une préforme sèche, constituée de bandes non pégueuses, après relâchement de l'action de la vessie.

La demande internationale WO2005/011961 décrit un procédé et un dispositif pour le drapage de préformes allongées. Ce dispositif utilise des rouleaux pour tendre, presser et compacter les bandes déposées sur un outillage. Ce dispositif n'est pas adapté à la dépose de bandes sèches comprenant une faible quantité de liant. Il ne dispose pas des moyens de soudure et de moyens permettant d'appliquer le cycle thermique de compactage. La pression de compactage est appliquée sur la bande froide au fur et à mesure de sa dépose par l'intermédiaire d'un rouleau.

Dans le cas d'une bande de fibres sèches, l'application de la pression selon une génératrice de ce rouleau ne permet pas de maintenir une longueur suffisante de bande sur l'outillage pour éviter tout froissement de celle-ci lors de l'action d'épanouissement. En multipliant les rouleaux sous forme de train pour palier à cet inconvénient, ceux-ci créent, par leur action de roulement, des ondulations des fibres, particulièrement lorsque l'épaisseur de la préforme sèche, par ailleurs poreuse, devient élevée. Or, de telles ondulations sont fortement préjudiciables aux caractéristiques mécaniques des pièces ainsi obtenues.

Finalement, l'action de roulement ne permet pas d'appliquer un cycle de pression-température local adapté au moment de la dépose. En effet, la fluidification et le foisonnement du liant combinés à l'action des rouleaux conduit à un essorage local du liant dans les plis sur lesquels roulent les rouleaux et la création d'amas de liant dans la préforme, lesquels amas sont également préjudiciables à la qualité de la pièce finale.

Il existe donc un besoin pour un procédé et un dispositif permettant la réalisation de préformes fibreuses allongées à partir de fibres continues contenant une petite quantité de liant, adapté à une production de série et dont la qualité de production est indépendante de l'adresse de l'opérateur.

Afin de résoudre les insuffisances de l'art antérieur, l'invention propose un procédé pour la dépose progressive et continue sur la longueur d'une forme allongée d'une bande fibreuse comprenant une petite quantité de liant pour la constitution d'une préforme dite sèche dont la section comprend au moins deux ailes non coplanaires comprenant des étapes consistant à séquentiellement et dans cet ordre à :
- chauffer un tronçon de ladite bande de sorte à activer la petite quantité de liant ;
- plaquer ledit tronçon sur l'une des faces de la préforme ;
- préformer à chaud le tronçon à la section de la préforme ;
- maroufler à chaud le tronçon sur les faces de la préforme ;
- calibrer au cours de son refroidissement l'empilement comprenant le tronçon ainsi déposé en appliquant une pression sur toute les faces correspondante de la préforme ;
ces étapes sont appliquées séquentiellement pour un tronçon donné mais sont réalisées simultanément à l'échelle de la bande sur des tronçons successifs de sorte à réaliser une dépose continue. La continuité de cette dépose est indispensable pour épanouir la bande selon la courbure de la préforme ou selon des variations de largeur de section de celle-ci.

Les bandes de fibres ainsi déposées peuvent être des tissus ou des nappes non tissées ou encore des multi-axiaux comprenant des fibres orientées à un angle θ par rapport à l'axe longitudinal de la préforme et/ou des fibres orientées à 90° par rapport à cet axe. Typiquement θ est compris entre 30° et 60°. Ces fibres continues s'étendent sur au moins deux ailes non coplanaires de la section de la préforme.

Ainsi le procédé de l'invention utilise une dépose progressive selon une direction sensiblement parallèle à l'axe longitudinal de la préforme, et un compactage - calibrage progressif et continu de la bande fibreuse sur la préforme. Cette dépose continue et le compactage local permet de supprimer les temps de manipulation des moyens de compactage de type sac à vide de l'art antérieur.

Un tel procédé ne peut pas être mis en oeuvre par drapage manuel, c'est pourquoi l'invention concerne également un dispositif pour la mise en oeuvre du procédé selon l'invention, lequel dispositif comprend :
- un poinçon reproduisant la forme de la préforme ;
- des moyens de dépose aptes à déposer, maroufler et calibrer sur la préforme une bande de matière fibreuse comprenant une petite quantité de liant, lesdits moyens comprenant une goulotte de préformage de ladite bande à la section de la préforme ;
- des moyens de déplacement relatif des moyens de dépose le long du poinçon ;
le déplacement relatif des moyens de dépose le long du poinçon permet de réaliser la dépose, le compactage et le calibrage progressif des bandes sur la préforme. Indifféremment le poinçon peut être mobile et se déplacer par rapport aux moyens de dépose fixes ou inversement.

Le préformage de la bande permet, en rapprochant progressivement la bande des surfaces de la préforme, d'éviter tout froissement de la bande lors de son marouflage, notamment dans les angles rentrants, et autorise la réalisation dudit marouflage par des patins, dont la surface est élastique et sensiblement déformable sous la pression de contact, qui appliquent la pression de marouflage sur une surface sensiblement parallèle à la face de la préforme, évitant ainsi les ondulations et les phénomènes d'essorage.

Avantageusement, la goulotte de préformage comprend deux portions séparées et mobiles l'une par rapport à l'autre et des moyens aptes à déplacer lesdites portions de sorte à adapter la section de préformage aux variations de section du poinçon et/ou de la préforme. Cette disposition permet d'utiliser la même goulotte de préformage pour une série de préformes homothétiques, de forme de section sensiblement équivalente mais de dimension différente, de réaliser des préformes présentant des variations de section sur leur longueur, notamment des élargissements radiaux et de s'adapter à l'épaisseur de la couche déposée notamment lorsque le drapage est réalisé en plusieurs passages du poinçon sous les moyens de dépose.

Avantageusement le poinçon est constitué d'un matériau poreux ou ajouré. Cette caractéristique permet de réduire l'inertie thermique du poinçon et ainsi de réduire les temps de chauffage - refroidissement de la préforme, temps qui influencent directement la productivité du procédé. A titre d'exemple nullement limitatif, le poinçon peut être constitué d'une tôle ajourée ou d'une grille. Cette configuration permet avantageusement de refroidir la préforme, elle-même poreuse, par le soufflage d'un gaz caloporteur a travers les parois du poinçon. Selon un mode de réalisation préféré les moyens de marouflage comprennent des patins dont la surface de contact est élastique et déformable sous l'action de la pression de contact. Ceux-ci coopèrent avec la goulotte de préformage pour coller la bande sur le profil de la préforme. Le frottement des patins permet de tendre la bande et de réaliser l'épanouissement de celle-ci.

Toujours selon un mode préféré de réalisation, le calibrage est réalisé par des patins constitués de plaques dont la surface de contact avec la préforme est rigide, lesdites plaques étant articulées entre elles. Ces patins de calibrage entrent en action au cours du refroidissement de la préforme. Les plaques de calibrage permettent d'exercer une action de compactage et de calibrage sur l'empilement, de sorte à calibrer l'épaisseur de la préforme à une valeur déterminée. L'assemblage articulé de plaques permet d'appliquer cette pression de calibrage sur une surface sensiblement parallèle à la surface du poinçon et à l'ensemble de plaques de s'adapter à la forme de cette surface.

Les plaques peuvent être épaisses et rigides, plus particulièrement lorsque la préforme est droite ou de faible courbure. Alternativement, lorsque la préforme présente de faibles rayons de courbure, les dites plaques peuvent présenter une certaine souplesse pour s'adapter à la courbure, la surface de contact avec la préforme restant dure et rigide.

Avantageusement le dispositif de dépose comprend un dispositif de localisation du profil du poinçon par rapport aux moyens de dépose au cours de leur déplacement relatif. Un tel dispositif permet de travailler par copiage et de piloter l'orientation de la bande déposée ainsi que les moyens de marouflage et de calibrage en suivant le profil effectif dudit poinçon.

Afin de poser des renforts locaux, les moyens de dépose comprennent avantageusement un dispositif de découpe de la bande selon sa largeur. L'information délivrée par la localisation du profil du poinçon permet de localiser de manière précise la position de ces renforts.

Préférentiellement, le poinçon, est disposé sur une table mobile et les moyens de dépose sont placés sur une table fixe, des moyens d'avance automatiques synchronisés étant utilisés pour déplacer le poinçon sous les moyens de dépose.

Avantageusement un tel dispositif comprend également des moyens pour déposer des bandes de fibres s'étendant parallèlement à l'axe longitudinal de la préforme sur les faces de la section ne présentant pas de variation de rayon de courbure selon leur largeur. De telles bandes sont chauffées préalablement à leur dépose de sorte à activer le liant et préférentiellement plaquées sur la préforme par les patins de calibrage.

Un tel dispositif permet de fabriquer économiquement et de manière reproductible des préformes fibreuses destinées à la réalisation de pièces composites tels que des cadres de fuselage d'aéronef.

L'invention sera maintenant plus précisément décrite dans le cadre de modes de réalisation préférés, nullement limitatifs, représentés sur les figures 1 à 11, dans lesquelles :
- la figure 1 est une vue schématique de profil d'un mode de réalisation du dispositif de dépose ;
- la figure 2 montre le dispositif de drapage selon une perspective vue de dessus ;
- la figure 3 illustre en perspective un mode de réalisation de la goulotte de préformage adaptée aux sections en U ;
- la figure 4 est une vue en perspective du dispositif de réglage de la goulotte de préformage selon le profil de la préforme ;
- la figure 5 est une vue de dessus montrant la progression de l'action de la goulotte de préformage (figures 5A à 5C) au cours de la dépose de la bande sur la préforme ;
- la figure 6 est une vue en section de l'application séquentielle (figures 6A à 6B) d'une bande fibreuse sur la préforme selon un mode de réalisation correspondant à un profilé de section en U ;
- la figure 7 est une vue en section de l'application des patins de marouflage sur la préforme selon un mode de réalisation adapté à la réalisation d'une préforme de section en U ;
- la figure 8 montre une vue en section de l'application des patins de calibrage selon une mode de réalisation correspondant à une section de préforme en U ;
- la figure 9A illustre en perspective vue de dessus un exemple d'application des plaques de calibrage sur une des faces de la préforme ;
- la figure 9B est un exemple alternatif de réalisation du dispositif d'application des plaques de préformage sur la préforme ;
- la figure 10 illustre en section les étapes (figures 10A à 10F) pour la dépose d'un tronçon de bande selon une section de profilé en Z ;
- la figure 11 est un exemple en section de stratification d'un profilé selon un mode de réalisation de l'invention.

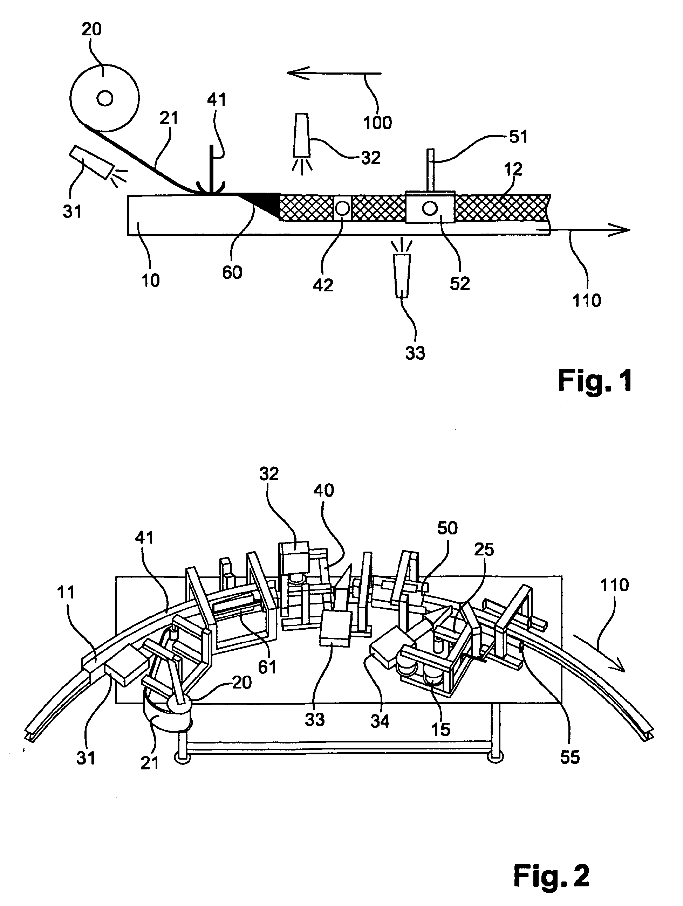

Figure 1, Le dispositif de dépose est constitué de moyens de stockage (20) de bandes de matière comprenant une petite quantité de liant, de moyens de marouflage (41, 42), d'une goulotte de préformage (60) de moyens de calibrage (51, 52), de moyens de chauffage (31, 32) préférentiellement par soufflage d'air chaud et de moyens de refroidissement (33), préférentiellement par soufflage d'air froid.

La bande de matière fibreuse (21) est stockée préférentiellement sur une bobine (20). Ladite bobine est dévidée à vitesse sensiblement constante, sa vitesse de rotation pouvant être avantageusement synchronisée avec la vitesse de déplacement relative (100, 110) du dispositif de dépose par rapport au poinçon (10) de sorte à en contrôler la tension longitudinale.

Un dispositif de chauffage par soufflage d'air chaud (31) insuffle de l'air chauffé à une température apte à activer a petite quantité de liant contenue dans la bande (21) et ainsi favoriser l'adhésion de la dite bande sur la préforme. La température d'activation est généralement comprise entre 100 °C et 180 °C pour une résine thermodurcissable, elle peut atteindre 300 °C pour certaines résines thermoplastiques.

Le liant est incorporé à la matière à déposer préalablement à l'opération de dépose. Cette incorporation est réalisée par poudrage d'une résine thermoplastique ou thermodurcissable, par l'intermédiaire d'un film thermoplastique co-laminé avec la bande fibreuse, sous forme de fibres thermoplastiques intégré dans la bande de fibres de renfort ou de fibres de renfort ayant reçu un gainage thermoplastique.

La bande est pressée sur l'une des faces du poinçon (10) par un premier patin de marouflage (41). Une goulotte (60) vient alors rabattre les bords de ladite bande (21) sur les flancs du poinçon.

Un second dispositif de chauffage (22) orienté vers les flancs du poinçon chauffe la bande de matière juste avant le marouflage des flancs par des patins adaptés (42).

Les patins de marouflage ont pour fonctions d'une part de coller la bande marouflée sur la préforme et d'autre part d'épanouir cette bande lorsque le profil à épouser présente sur au moins une des ailes de la section une variation de rayon de courbure selon la largeur de ladite aile. À cette fin ils appliquent sur la bande une pression sensiblement normale à la surface de la préforme, pour l'effet de collage, pression qui combinée au frottement du patin dans une direction sensiblement parallèle à l'axe longitudinal de la préforme produit l'effet d'épanouissement.

Le patin est préférentiellement de largeur réduite et le contact entre le patin et la préforme préférentiellement réalisé par l'intermédiaire d'un matériau déformable.

Après marouflage de la bande la préforme est refroidie par un soufflage d'air froid (33) et calibrée au cours de ce refroidissement par l'application d'une pression normale sur toutes ses faces. Les éléments de calibrage (51, 52) se présentent sous la forme de plaques dures plaquées sur les faces de la préforme.

Figure 2, selon un mode de réalisation, le dispositif de dépose est fixe et le poinçon (11) est mobile suivant une trajectoire (110) sensiblement parallèle à son axe longitudinal. Alternativement, le déplacement relatif du poinçon est du dispositif de dépose peut être obtenu par un poinçon fixe et un dispositif de dépose monté sur un chariot mobile par rapport à ce poinçon, voir par la combinaison des deux mouvements.

Selon un mode de réalisation particulier le dispositif de dépose comprend des moyens (25, 15) pour la dépose de nappes de renfort unidirectionnelles (25) dont les fibres sont orientées sensiblement parallèlement à l'axe longitudinal de la préforme. Ces fibres sont déposées sur les ailes de la préforme qui ne présentent pas de variation de rayon de courbure selon leur largeur.

Selon ce mode de réalisation le dispositif de dépose comprend un dispositif supplémentaire de chauffage (34) apte à activer la faible quantité de liant comprise dans les bandes de renfort unidirectionnelles (25), lesquelles sont ensuite pressées et calibrées par des éléments de calibrage à plaques (55).

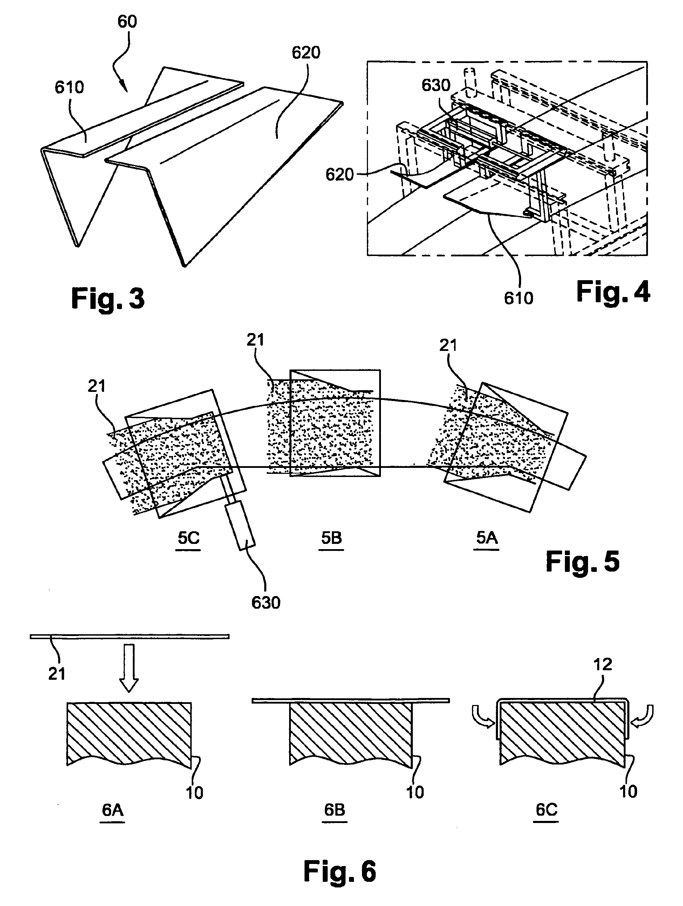

La faible pégosité des bandes de fibres, dites sèches, ne permet pas de leur faire épouser simultanément deux surfaces non coplanaires sans risque de glissement et donc de mauvais positionnement de ladite bande. La goulotte de préformage (60), figure 3, permet de rapprocher progressivement les bords de la bande des flancs de la préforme, après que la dite bande ait été marouflée et donc immobilisée sur l'une des faces de la préforme. Avantageusement ladite goulotte se présente en deux parties (610, 620) disjointes par rapport à un plan de symétrie de normale perpendiculaire à l'axe longitudinal de la préforme. Figure 4, ces deux parties (610, 620) de la goulotte peuvent être rapprochées ou éloignées l'une de l'autre par l'intermédiaire d'un vérin (630) ou d'un ressort.

Figure 5, cette disposition permet d'adapter l'action de la dite goulotte dans le cas où la préforme présente des variations de section.

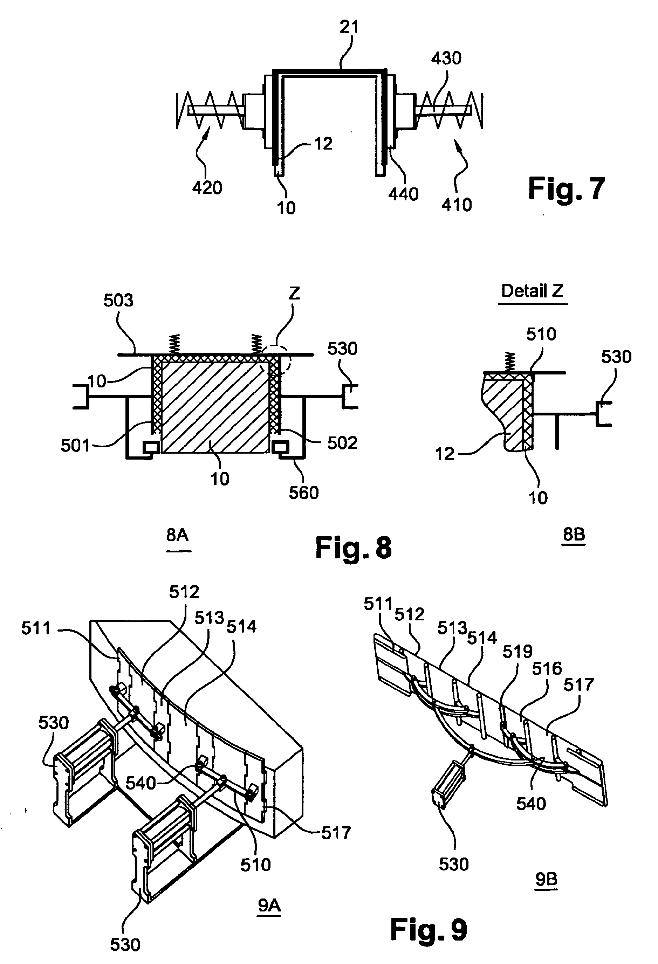

Figure 6, dans l'exemple de la réalisation d'une section en U, la bande de matière fibreuse (21) est plaquée et marouflée sur la face supérieure de la préforme (12) après activation de l'interface par soufflage d'air chaud, figures 6A et 6B, puis les bords de la bande (21) sont rabattus sur les flancs de la préforme (12), figure 6C. Figure 7, les flans sont alors marouflés simultanément par des patins de marouflage (410, 420). Ceux-ci comprennent un patin d'interface (440) préférentiellement constitué d'un matériau élastomère apte à résister à la température de marouflage et un élément d'application de la pression (430) piloté en effort, typiquement constitué d'un vérin à gaz. Les patins de marouflage sont relativement étroits et la déformabilité du patin d'interface suffit à adapter leur forme à la courbure locale de la préforme. Pour des applications particulières (angles, épaulements) le profil du patin peut être adapté à la forme.

L'effet technique des patins de marouflage est d'appliquer une pression normale et tangentielle, cette dernière par frottement, de sorte à coller la bande sur la préforme et à réaliser son épanouissement, c'est pourquoi les éléments d'application de la pression (430) sont pilotés en force. La force appliquée par les patins sur la préforme est contrôlée par l'asservissement des moyens d'application de la pression, typiquement par le contrôle de la pression d'alimentation des vérins à gaz. L'intensité relative du frottement est, elle, contrôlée par la raideur et la nature du patin d'interface. En addition le patin d'interface peut recevoir un revêtement pour en modifier les caractéristiques de frottement et améliorer leur résistance à l'usure, par exemple, un revêtement à base de fluoroéthylène. Typiquement, à nature d'interface égale, plus la force d'application du patin est élevée et plus le patin d'interface est déformable, plus la pression tangentielle sur la bande et la préforme sera élevée. Les combinaisons adaptées sont déterminées par des essais.

Figure 8, le calibrage est réalisé au cours du refroidissement de la préforme en appliquant sur toutes les faces une pression par l'intermédiaire de plaques rigides (501, 502, 503) déplacés par des moyens (530) tels que des vérins ou des vis à billes pilotés en position. Le pilotage en position est réalisé à partir de l'information recueillie par des capteurs de copiage (560) qui localisent le poinçon (10) dans l'espace de la machine. Le calibrage au cours du refroidissement permet de déterminer l'épaisseur théorique de la préforme compte tenu de la nature des plis et de la quantité de liant déposés sans tenir compte des effets de foisonnement du liant. La position du poinçon étant connue de l'information du capteur de copiage (560) la position des plaques de calibrage est déterminée en retranchant de cette position l'épaisseur théorique de la préforme (12).

L'information délivrée par les capteurs de copiage est également utilisée pour centrer les moyens de dépose de la bande (20) par rapport à la préforme et pour piloter le déplacement relatif des deux parties (610, 620) de la goulotte de préformage.

Figure 8B, les angles sont calibrés à leur rayon théorique par des réglettes (510) liées à la plaque de calibrage supérieur (503) et dont l'action est sensible essentiellement lors de la dépose des derniers plis. La plaque de calibrage supérieure est plus large que la préforme. Les réglettes (510) de reprise des rayons peuvent se présenter sous la forme de réglettes continues reproduisant la courbure de ladite préforme. Les dites réglettes peuvent également se présenter sous la forme de multiples segments de faible longueur qui sont alors droits et positionnés tangentiellement par rapport à la courbure. Lesdits segments sont alors fixés dans des rainures pratiquées sur les bords de la plaque de calibrage supérieure et leur position radiale est ajustée en se servant du poinçon (10) comme gabarit.

La forme des plaques de calibrage latérales, reproduit la courbure de la préforme.

Figure 9, selon un mode de réalisation préféré lorsque le rayon de courbure desdites pièces est suffisamment important, les plaques de calibrages latérales sont réalisées à partir de plaques planes (511-517) en matériau dur, tel que de l'acier, connectées par des liaisons pivot d'axe parallèle à l'axe de la courbure longitudinale de la préforme. Les plaques sont appliquées sur la préforme par l'intermédiaire d'un ou plusieurs vérins (530) connectés auxdites plaques par des palonniers articulés (540). Ainsi les plaques s'adaptent à la courbure effective de la préforme. Lorsque le rayon de courbure est trop faible, on utilise des plaques d'acier moins épaisses et flexibles, aptes à s'adapter à la courbure de la pièce sous l'effet de la pression de contact.

Les plaques de calibrage peuvent au besoin recevoir un revêtement pour améliorer leur résistance à l'usure ou pour modifier leurs propriétés de frottement avec la préforme.

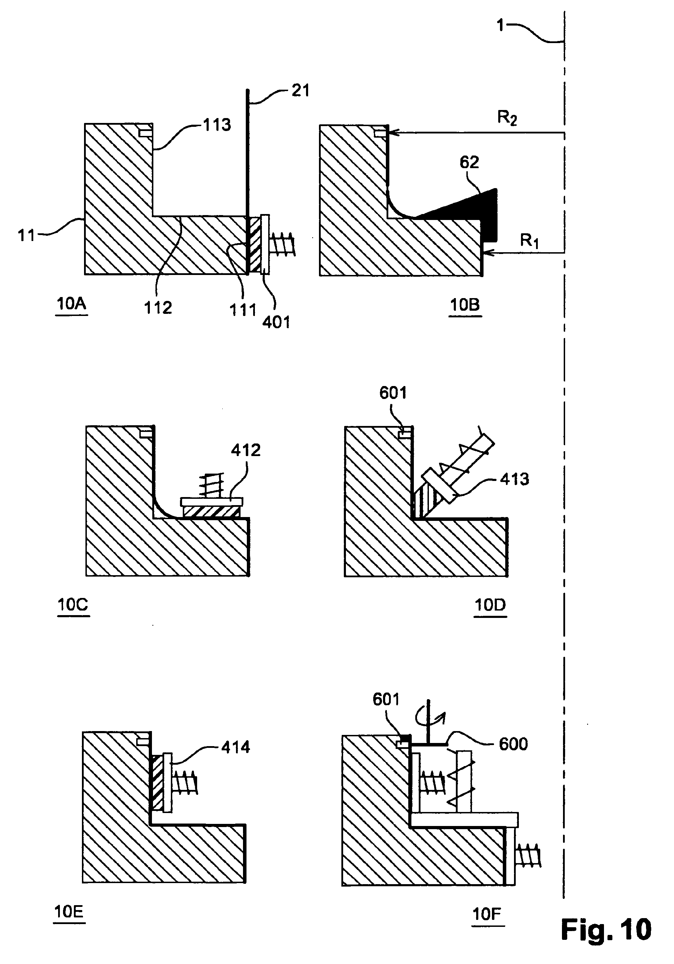

Figure 10, selon un exemple de réalisation d'une préforme courbe dont la section est sensiblement un Z, la bande de matière (21) est d'abord appliquée sur la face (111) du poinçon (11) ou de la préforme qui présente le plus faible rayon de courbure. Figure 10B, la bande de manière est ensuite rabattue vers les autres faces par l'intermédiaire de la goulotte de préformage (61). La portion de bande s'appliquant sur la face (112) présentant une variation de rayon de courbure selon sa largeur est marouflée par l'intermédiaire d'un patin de marouflage (412), figure 10C. Outre le fait de plaquer ladite bande (21) sur la préforme, ce patin de marouflage réalise l'épanouissement de la préforme. Un patin de marouflage spécifique (413), figure 10D, permet de terminer l'épanouissement de la bande (21) dans l'angle rentrant de la section. Le marouflage se termine par le passage d'un patin (414) sur la face (113) de plus grand rayon de courbure (R2). Figure 10F, le calibrage est réalisé sur l'ensemble des faces au cours du refroidissement de la préforme.

L'ensemble de ces opérations est réalisé simultanément sur des tronçons différents de la préforme au cours du déplacement relatif entre le poinçon et le dispositif de dépose.

Le refroidissement est obtenu par soufflage d'air à température ambiante ou d'air refroidi soit directement sur la préforme soit au travers du poinçon ou par combinaison des deux. Le cycle thermique de chauffage/refroidissement détermine la vitesse de déplacement relatif et par suite la productivité du dispositif. À cette fin il est utile de minimiser l'inertie thermique du poinçon (10, 11) tant pour accélérer le chauffage que le refroidissement. Le poinçon est par conséquent avantageusement constitué d'un matériau ajouré tel qu'une tôle perforée pliée ou une grille pliée à la forme du poinçon, laquelle grille est recouverte d'un tissu à délaminer favorisant le démoulage tel qu'un tissu de verre avant le drapage Ce tissu de verre évite l'adhésion de la préforme à l'outillage et peut facilement être arraché de ladite préforme avant le processus d'injection/infusion de résine.

Le poinçon étant ajouré et la préforme poreuse, le refroidissement est accéléré en soufflant de l'air froid à travers le poinçon et la préforme. Cette disposition permet également de réaliser le refroidissement en même temps que sont appliqués les plaques de calibrage sur la préforme améliorant ainsi le calibrage de ladite préforme.

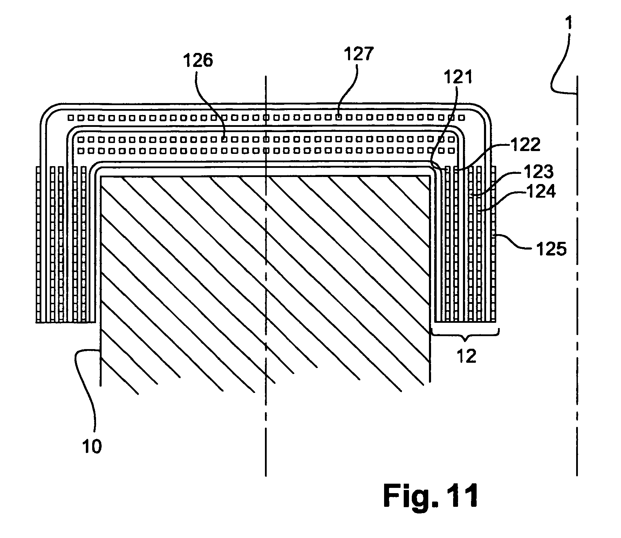

Figure 11, le dispositif permet la dépose d'empilements complexes comprenant par exemple :
- des couches de triaxial -30°, 90°, +30° ou +30°, 90°, -30° (121, 123,125)
- entre lesquelles sont intercalés des renforts uni-axiaux à 0° (122, 124, 126, 127)

Les renforts uni-axiaux situés sur la face supérieure de la réforme (127, 126), face qui présente une variation du rayon de courbure sur sa largeur sont déposés par bandes étroites d'une largeur de 4 à 6 mm par exemple par un procédé de placement de fibres sèches.

Avantageusement, à l'issue de l'opération de dépose ou simultanément à celle-ci, juste après l'opération de calibrage, des moyens de découpe (600) permettent de finir les ailes aux deux extrémités de la section. Ces moyens de découpe sont constitués par une molette (600) roulant dans une rainure (601) pratiquée dans les faces (111, 113) du mandrin en vis-à-vis desdites ailes de la préforme.

La description ci-avant illustre clairement que par ses différentes caractéristiques et leurs avantages, la présente invention atteint les objectifs qu'elle s'était fixés. En particulier, elle permet la fabrication de préforme sèche circulaire de manière automatisée et reproductible. La reproductibilité du procédé et l'utilisation de fibres sèches, permettent d'obtenir des pièces comprenant des taux de fibres supérieurs à 60 % en masse. De tels taux de fibres, impossibles à atteindre par les technique de l'art antérieur, permettent, à masse égale, d'augmenter les caractéristiques mécaniques de ces pièces ou à caractéristiques mécaniques égales de réduire leur masse, ce qui est particulièrement avantageux pour le domaine aéronautique

## Revendications

1. Procédé pour la dépose continue sur la longueur d'une forme allongée d'une bande fibreuse (21) comprenant une petite quantité de liant pour la constitution d'une préforme dite sèche (12) dont la section comprend au moins deux ailes non coplanaires, **caractérisé en ce qu'**il comprend des étapes consistant à séquentiellement et dans cet ordre :
a) chauffer un tronçon de la bande de sorte à activer la petite quantité de liant ;
b) plaquer ledit tronçon sur l'une des faces de la préforme ;
c) préformer à chaud le tronçon à la section de la préforme ;
d) maroufler à chaud le tronçon sur les faces de la préforme ;
e) calibrer au cours de son refroidissement l'empilement comprenant le tronçon ainsi déposé en appliquant une pression sur toutes les faces en correspondance de la préforme ;
les étapes a à e étant appliquées simultanément sur des tronçons différents et successifs de la bande fibreuse de sorte à obtenir une dépose progressive et continue de la bande.

2. Dispositif pour le drapage d'une préforme allongée selon le procédé de la revendication 1, **caractérisé en ce qu'**il comprend :
- un poinçon (10) reproduisant la forme de la préforme ;
- des moyens de dépose (41, 42, 51, 52) aptes à déposer, maroufler et calibrer sur la préforme une bande de matière fibreuse comprenant une petite quantité de liant, lesdits moyens comprenant une goulotte (60) de préformage de ladite bande (21) à la section de la préforme (12) ;
- des moyens de déplacement relatif des moyens de dépose le long du poinçon.

3. Dispositif selon la revendication 2, **caractérisé en ce que** la goulotte de préformage (60, 61) comprend deux portions séparées (610, 620) et mobiles l'une par rapport à l'autre et des moyens (630) aptes à déplacer lesdites portions de sorte à adapter la section de préformage aux variations de section du poinçon (10) ou de la préforme (12).

4. Dispositif selon la revendication 2, **caractérisé en ce que** le poinçon (10) est constitué d'un matériau poreux ou ajouré.

5. Dispositif selon la revendication 4, **caractérisé en ce qu'**il comprend des moyens (33, 34) aptes à refroidir la préforme par le soufflage d'un fluide caloporteur à travers le poinçon.

6. Dispositif selon la revendication 2, **caractérisé en ce que** les moyens de dépose comprennent des moyens de marouflage (41, 42, 411, 412, 413, 414) comportant des patins dont la surface de contact avec la préforme est élastique et déformable sous l'action de la pression de contact.

7. Dispositif selon la revendication 2, **caractérisé en ce que** les moyens de dépose comprennent des moyens de calibrage (501, 502, 503, 51, 52) comportant des patins constitués de plaques (511, 512, 513, 514, 515, 516, 517) articulées.

8. Dispositif selon la revendication 2, caractérisé ce qu'il comprend des moyens (560) aptes à localiser le profil du poinçon (10) au cours de son déplacement relatif par rapport aux moyens de dépose.

9. Dispositif selon l'une quelconque des revendications 2 à 8, **caractérisé en ce que** le poinçon (10) est de forme sensiblement circulaire et disposé sur une table mobile, que les moyens de dépose sont fixes et qu'il comprend des moyens aptes à déplacer le poinçon (10) sous les moyens de dépose.

## Patentansprüche

1. Verfahren zur kontinuierlichen Aufbringung eines Faserbandes (21) auf die Länge einer länglichen Form, umfassend eine kleine Menge an Bindemittel für die Bildung einer so genannten Trockenvorform (12), deren Querschnitt mindestens zwei nicht coplanare Schenkel umfasst, **dadurch gekennzeichnet, dass** es die Schritte umfasst, die nacheinander und in dieser Reihenfolge darin bestehen:
a) einen Abschnitt des Streifens zu erhitzen, um die kleine Menge an Bindemittel zu aktivieren;
b) den Abschnitt auf eine der Seiten der Vorform zu drücken;
c) den Abschnitt auf den Querschnitt der Vorform heiß vorzuformen;
d) den Abschnitt auf den Seiten der Vorform heiß anzureiben;
e) während seiner Abkühlung den Stapel, umfassend den so unter Anlegen eines Drucks auf alle entsprechenden Seiten der Vorform aufgebrachten Abschnitt, zu kalibrieren;
wobei die Schritte a bis e gleichzeitig an unterschiedlichen und aufeinanderfolgenden Abschnitten des Faserstreifens angewandt werden, um eine progressive und kontinuierliche Aufbringung des Streifens zu erzielen.

2. Vorrichtung zum Drapieren einer länglichen Vorform nach dem Verfahren aus Anspruch 1, **dadurch gekennzeichnet, dass** es umfasst:
- einen Stempel (10), der die Form der Vorform reproduziert;
- Aufbringmittel (41, 42, 51, 52), die geeignet sind, auf die Vorform einen Streifen aus Fasermaterial aufzubringen, anzureiben und zu kalibrieren, umfassend eine kleine Menge eines Bindemittels, wobei die Mittel eine Rinne (60) zum Vorformen des Streifens (21) auf den Querschnitt der Vorform (12) umfassen;
- Mittel zum relativen Verschieben der Aufbringmittel entlang des Stempels.

3. Vorrichtung nach Anspruch 2, **dadurch gekennzeichnet, dass** die Vorformungsrinne (60, 61) zwei getrennte Abschnitte (610, 620), die zueinander beweglich sind, und Mittel (630) umfasst, die geeignet sind, die Abschnitte zu verschieben, um den Vorformungsquerschnitt an die Änderungen des Querschnitts des Stempels (10) oder der Vorform (12) anzupassen.

4. Vorrichtung nach Anspruch 2, **dadurch gekennzeichnet, dass** der Stempel (10) aus einem porösen oder gelochten Material besteht.

5. Vorrichtung nach Anspruch 4, **dadurch gekennzeichnet, dass** sie Mittel (33, 34) umfasst, die geeignet sind, die Vorform durch das Blasen eines Kühlfluids durch den Stempel zu kühlen.

6. Vorrichtung nach Anspruch 2, **dadurch gekennzeichnet, dass** die Aufbringmittel Mittel zum Anreiben (41, 42, 411, 412, 413, 414) umfasst, die Beläge umfassen, deren Kontaktfläche mit der Vorform elastisch und unter der Wirkung des Kontaktdrucks verformbar ist.

7. Vorrichtung nach Anspruch 2, **dadurch gekennzeichnet, dass** die Aufbringmittel Kalibriermittel (501, 502, 503, 51, 52) umfassen, die Beläge umfassen, die von Gelenkplatten (511, 512, 513, 514, 515, 516, 517) gebildet sind.

8. Vorrichtung nach Anspruch 2 , **dadurch gekennzeichnet, dass** sie Mittel (560) umfasst, die geeignet sind, das Profil des Stempels (10) während seiner relativen Verschiebung in Bezug auf die Aufbringmittel zu lokalisieren.

9. Vorrichtung nach einem der Ansprüche 2 bis 8, **dadurch gekennzeichnet, dass** der Stempel (10) eine im Wesentlichen kreisförmige Form hat und auf einem beweglichen Tisch angeordnet ist, dass die Aufbringmittel fest sind, und dass sie Mittel umfasst, die geeignet sind, den Stempel (10) unter den Aufbringmitteln zu verschieben.

## Claims

1. Method for continuously laying a fibrous strip (21) comprising a small quantity of binder along the length of an elongate form to constitute what is referred to as a dry preform (12) the section of which comprises at least two non-coplanar flanges, **characterized in that** it comprises steps which, sequentially and in this order, involve:
a) heating a portion of the strip so as to activate the small amount of binder;
b) pressing the said portion firmly against one of the faces of the preform;
c) hot-preforming the portion to the section of the preform;
d) hot-taping the portion to the faces of the preform;
e) as it cools, calibrating the stack comprising the portion thus laid by applying pressure to all the corresponding faces of the preform;
steps a to e being applied simultaneously to various and successive portions of the fibrous strip so as to obtain progressive and continuous laying of the strip.

2. Device for the laying-up of an elongate preform according to the method of Claim 1, **characterized in that** it comprises:
- a punch (10) that reproduces the shape of the preform;
- laying means (41, 42, 51, 52) able to lay, tape and calibrate a strip of fibrous material comprising a small quantity of binder on the preform, the said means comprising a trough (60) for performing the said strip (21) to the section of the preform (12);
- means for the relative movement of the laying means along the punch.

3. Device according to Claim 2, **characterized in that** the performing trough (60, 61) comprises two separate portions (610, 620) able to move relative to one another and means (630) able to move the said portions so as to adapt the preforming section to suit the variations in section of the punch (10) or of the preform (12).

4. Device according to Claim 2, **characterized in that** the punch (10) is made of a porous or perforated material.

5. Device according to Claim 4, **characterized in that** it comprises means (33, 34) able to cool the preform by blowing a heat-transfer fluid through the punch.

6. Device according to Claim 2, **characterized in that** the laying means comprise taping means (41, 42, 411, 412, 413, 414) comprising pads of which the area for contact with the preform is elastic and deformable under the action of the contact pressure.

7. Device according to Claim 2, **characterized in that** the laying means comprise calibrating means (501, 502, 503, 51, 52) comprising pads consisting of articulated plates (511, 512, 513, 514, 515, 516, 517).

8. Device according to Claim 2, **characterized in that** it comprises means (560) able to locate the profile of the punch (10) during its relative movement with respect to the laying means.

9. Device according to any one of Claims 2 to 8, **characterized in that** the punch (10) is of substantially circular shape and placed on an adjustable bed, **in that** the laying means are fixed and **in that** it comprises means able to move the punch (10) under the laying means.
